# EUROPÄISCHE PATENTANMELDUNG

(11) **EP 4 124 511 A1**
(43) Veröffentlichungstag der Anmeldung: **01.02.2023**
(21) Anmeldenummer: 22182271.1
(22) Anmeldetag: 30.06.2022
(51) Int. Cl.: B60R 9/10

(54) **TRÄGERSYSTEM**

(30) Priorität: 29.07.2021 DE 102021208190
(71) Anmelder: BOS Technology Services GmbH, 73760 Ostfildern (DE)
(72) Erfinder: Sang, Johannes, 55283 Nierstein (DE); Kuhn, David, 75391 Gechingen (DE); Reichel, Johannes, 71254 Ditzingen (DE); Neubrand, Frank, 71263 Weil der Stadt (DE)
(74) Vertreter: Patentanwälte Ruff, Wilhelm, Beier, Dauster & Partner mbB

(57) **Zusammenfassung**

2.1 Ein derartiges Trägersystem zum Transport und/oder zum stationären Aufbewahren wenigstens eines Fahrrads, aufweisend ein Grundgestell, das zur Montage an einem Kraftfahrzeug und/oder zum Abstellen auf einer Bodenfläche eingerichtet ist, wenigstens eine an dem Grundgestell angeordnete und entlang einer Längsrichtung längserstreckte Aufnahmespur, die zum Aufnehmen eines Vorder- und/oder Hinterrads des Fahrrads eingerichtet ist, und aufweisend wenigstens eine Halteeinrichtung, die relativ zu dem Grundgestell beweglich ist zwischen einer Funktionsstellung, in welcher die Halteeinrichtung zum Halten des wenigstens einen Fahrrads in Hochrichtung von dem Grundgestell aufragt, und einer Nichtgebrauchsstellung, in welcher die Halteeinrichtung zum Verringern eines Raumbedarfs an das Grundgestell heranbewegt ist, ist bekannt.

2.2 Erfindungsgemäß weist die Halteeinrichtung einen seitlich versetzt zu der Aufnahmespur längserstreckten, mehrgliedrigen Klapprahmen mit wenigstens einem gelenkig an dem Grundgestell gelagerten ersten Rahmenglied und einem gelenkig mit dem ersten Rahmenglied verbundenen zweiten Rahmenglied auf, wobei die Rahmenglieder in einer im Wesentlichen in Längsrichtung und in Hochrichtung erstreckten Klappebene relativ zueinander und relativ zu dem Grundgestell zwischen der Funktions- und der Nichtgebrauchsstellung auf- und zusammenklappbar sind.

2.3 Einsatz bei einem Kraftfahrzeug.

## Beschreibung

Die Erfindung betrifft ein Trägersystem zum Transport und/oder zum stationären Aufbewahren wenigstens eines Fahrrads, aufweisend ein Grundgestell, das zur Montage an einem Kraftfahrzeug und/oder zum Abstellen auf einer Bodenfläche eingerichtet ist, wenigstens eine an dem Grundgestell angeordnete und entlang einer Längsrichtung längserstreckte Aufnahmespur, die zum Aufnehmen eines Vorder- und/oder Hinterrads des Fahrrads eingerichtet ist, und aufweisend wenigstens eine Halteeinrichtung, die relativ zu dem Grundgestell beweglich ist zwischen einer Funktionsstellung, in welcher die Halteeinrichtung zum Halten des wenigstens einen Fahrrads in Hochrichtung von dem Grundgestell aufragt, und einer Nichtgebrauchsstellung, in welcher die Halteeinrichtung zum Verringern eines Raumbedarfs an das Grundgestell heranbewegt ist.

Ein derartiges Trägersystem ist beispielsweise aus der DE 10 2019 208 542 A1 bekannt und als heckseitig an einem Kraftfahrzeug montierbares Heckträgersystem zum Transportieren von Fahrrädern vorgesehen. Das bekannte Trägersystem weist ein Grundgestell in Form eines Trägerprofils auf, das mittels zweier Auslegerprofile an dem Kraftfahrzeug montierbar ist. Auf dem Trägerprofil sind mehrere Profilschienen abgestützt, die jeweils zur Aufnahme eines Vorder- und/oder Hinterrads der zu transportierenden Fahrräder vorgesehen sind. Die Profilschienen bilden jeweils eine längserstreckte Aufnahmespur. Zudem weist das bekannte Trägersystem eine Halteeinrichtung in Form eines Stützbügels auf. Der Stützbügel ist U-förmig ausgeführt und relativ zu dem Trägerprofil klappbeweglich zwischen einer in etwa orthogonal von dem Trägerprofil in Hochrichtung aufragenden Funktionsstellung und einer flach auf das Trägerprofil geklappten Nichtgebrauchsstellung. Zu diesem Zweck ist der Stützbügel um eine Schwenkachse schwenkbeweglich mit dem Trägerprofil verbunden. Die Schwenkachse ist parallel zur Längsrichtung der Aufnahmespuren orientiert.

Aufgabe der Erfindung ist es, ein Trägersystem der eingangs genannten Art bereitzustellen, das gegenüber dem Stand der Technik verbesserte Eigenschaften aufweist und insbesondere eine verbesserte Halterung des wenigstens einen Fahrrads ermöglicht.

Diese Aufgabe wird dadurch gelöst, dass die Halteeinrichtung einen seitlich versetzt zu der Aufnahmespur längserstreckten, mehrgliedrigen Klapprahmen mit wenigstens einem gelenkig an dem Grundgestell gelagerten ersten Rahmenglied und einem gelenkig mit dem ersten Rahmenglied verbundenen zweiten Rahmenglied aufweist, wobei die Rahmenglieder in einer im Wesentlichen in Längsrichtung und in Hochrichtung erstreckten Klappebene relativ zueinander und relativ zu dem Grundgestell zwischen der Funktions- und der Nichtgebrauchsstellung auf- und zusammenklappbar sind. Der erfindungsgemäß vorhandene Klapprahmen bietet gegenüber üblichen Stützbügeln eine verbesserte Stabilität und damit Halterung des wenigstens einen Fahrrads. Im Vergleich zu üblichen Stützbügeln kann der erfindungsgemäß vorhandene Klapprahmen die beim Halten des wenigstens einen Fahrrads auftretenden Kräfte deutlich besser aufnehmen. Das Grundgestell ist bei unterschiedlichen Ausgestaltungen unterschiedlich ausgeführt. Beispielsweise kann das Grundgestell eine aus mehreren Rahmenprofilen zusammengefügte Rahmenkonstruktion, eine in Längsrichtung und Querrichtung flächig erstreckte Plattform oder dergleichen sein. Sofern das Trägersystem zum Transport des wenigstens einen Fahrrads eingerichtet ist, weist das Grundgestell vorzugsweise eine Befestigungseinrichtung zur lösbaren Befestigung des Grundgestells an einem Kraftfahrzeug auf. Die Befestigungseinrichtung kann beispielsweise zur Befestigung an einem Kugelgelenkkopf einer Anhängerkupplung des Kraftfahrzeugs eingerichtet sein. Die wenigstens eine Aufnahmespur kann eine in Längsrichtung erstreckte Spur im geometrischen Sinne und/oder durch ein physisch vorhandenes Bauteil gebildet sein. Bei einer Ausgestaltung ist die Aufnahmespur durch ein schienen- oder rinnenförmiges Bauteil und/oder einen schienen- oder rinnenförmigen Abschnitt des Grundgestells gebildet. Bei einer weiteren Ausgestaltung ist die Aufnahmespur eine in Längsrichtung entlang des Grundgestells erstreckte, gedachte Linie, entlang derer das wenigstens eine Fahrrad zum Transport und/oder zum Aufbewahren auf das Grundgestell aufgestellt wird. In der Verwendung des Trägersystems ist eine Längsrichtung des zu transportierenden und/oder aufzubewahrenden Fahrrads parallel zur Längsrichtung der wenigstens einen Aufnahmespur orientiert. Der Klapprahmen dient in erster Linie einer Aufnahme von Längs- und Querkräften. Der Klapprahmen weist mehrere Rahmenglieder auf, nämlich wenigstens das erste Rahmenglied und das zweite Rahmenglied. Das erste Rahmenglied ist gelenkig mit dem Grundgestell verbunden und das zweite Rahmenglied ist gelenkig mit dem ersten Rahmenglied verbunden. Die Klappebene des hierdurch gebildeten Bewegungs- und/oder Klappmechanismus des Klapprahmens ist im Wesentlichen in Längsund in Hochrichtung erstreckt. Dementsprechend sind die jeweiligen Gelenkachsen des ersten Rahmenglieds und des zweiten Rahmenglieds jeweils im Wesentlichen in Querrichtung orientiert. Bevorzugt ist die Klappebene parallel zur Längsrichtung und parallel zur Hochrichtung erstreckt, so dass auch von einer vertikalen Längsebene als Klappebene gesprochen werden kann. In diesem Fall ist die jeweilige Gelenkachse des ersten Rahmenglieds und des zweiten Rahmenglieds parallel zur Querrichtung orientiert. Bei einer Klappbewegung zwischen der Funktions- und der Nichtgebrauchsstellung bewegen die Rahmenglieder sich innerhalb der Klappebene. In der Funktionsstellung ragt der Klapprahmen in Hochrichtung von dem Grundgestell auf und ist insoweit auf- und/oder ausgeklappt. In der Nichtgebrauchsstellung ist der Klapprahmen zusammengeklappt und insbesondere in Hochrichtung kompakt an das Grundgestell heranbewegt. Der Klapprahmen kann auch als Mehrgelenkrahmen bezeichnet werden. Sofern der Klapprahmen lediglich das erste Rahmenglied und das zweite Rahmenglied aufweist, bildet der Klapprahmen in der Funktionsstellung - vereinfacht ausgedrückt - ein Rahmendreieck und/oder einen Dreigelenkbogen. Sofern der Klapprahmen zusätzlich zu dem ersten Rahmenglied und dem zweiten Rahmenglied ein weiteres Rahmenglied aufweist, kann auch von einem Rahmenviereck und/oder einem Viergelenkrahmen gesprochen werden. Die Längsrichtung, die Hochrichtung und die Querrichtung sind jeweils orthogonal zueinander orientiert und bilden ein räumliches kartesisches Koordinatensystem. Vorzugsweise ist das erste Rahmenglied zwischen einem ersten Ende und einem zweiten Ende längserstreckt, wobei das erste Ende um eine erste Gelenkachse gelenkig an dem Grundgestell gelagert ist. Vorzugsweise ist das zweite Rahmenglied zwischen einem ersten Ende und einem zweiten Ende längserstreckt, wobei das erste Ende um eine zweite Gelenkachse gelenkig mit dem zweiten Ende des ersten Rahmenglieds verbunden ist.

In Ausgestaltung der Erfindung ist das zweite Rahmenglied wenigstens in der Funktionsstellung einends mit dem Grundgestell lösbar starr verbunden. Dabei meint "starr" nicht gelenkig und/oder unbeweglich. Andernends ist das zweite Rahmenglied gelenkig mit dem ersten Rahmenglied verbunden. Die starre Verbindung mit dem Grundgestell kann form- und/oder kraftschlüssig sein. Zum Verlagern des Klapprahmens von der Funktionsstellung in die Nichtgebrauchsstellung ist die besagte Verbindung zwischen dem zweiten Rahmenglied und dem Grundgestell, vorzugsweise manuell, lösbar. Die starre lösbare Verbindung des zweiten Rahmenglieds mit dem Grundgestell in der Funktionsstellung wirkt einer ungewollten Verlagerung des Klapprahmens in die Nichtgebrauchsstellung entgegen.

In weiterer Ausgestaltung der Erfindung ist das zweite Rahmenglied in der Funktionsstellung einends mit einem ersten Verbindungsabschnitt des Grundgestells und in der Nichtgebrauchsstellung einends mit einem zweiten Verbindungsabschnitt des Grundgestells lösbar starr verbunden. Der erste Verbindungsabschnitt und der zweite Verbindungsabschnitt des Grundgestells sind entlang der Längsrichtung voneinander beabstandet. Vorzugsweise ist der zweite Verbindungsabschnitt in Bezug auf die Längsrichtung näher an der gelenkigen Verbindungsstelle zwischen dem ersten Rahmenglied und dem Grundgestell positioniert als der erste Verbindungsabschnitt. Andernends ist das zweite Rahmenglied gelenkig mit dem ersten Rahmenglied verbunden. Die lösbare Verbindung des zweiten Rahmenglieds mit dem Grundgestell in der Nichtgebrauchsstellung wirkt insbesondere einer ungewollten Verlagerung des Klapprahmens in Richtung der Funktionsstellung entgegen. Die starre lösbare Verbindung des zweiten Rahmenglieds mit dem ersten Verbindungsabschnitt und dem zweiten Verbindungsabschnitt kann jeweils kraft- und/oder formschlüssig sein. Die lösbare Verbindung zwischen dem Grundgestell und dem zweiten Rahmenglied ist bevorzugt als Schließbolzenverbindung ausgeführt.

In weiterer Ausgestaltung der Erfindung ist eine Arretiereinrichtung vorhanden, mittels derer das zweite Rahmenglied wenigstens in der Funktionsstellung einends an dem Grundgestell lösbar arretiert ist. Die Arretiereinrichtung dient insbesondere einer Sicherung einer in der Funktionsstellung bestehenden lösbaren Verbindung zwischen dem zweiten Rahmenglied und dem Grundgestell. Die Arretiereinrichtung wirkt einem ungewollten Lösen der besagten Verbindung entgegen. Zum Lösen der Verbindung muss zunächst die Arretiereinrichtung gelöst und/oder die Arretierung aufgehoben werden. Erst hiernach kann die Verbindung gelöst werden.

In weiterer Ausgestaltung der Erfindung ist eine parallel zu der Aufnahmespur längserstreckte weitere Aufnahmespur vorhanden, wobei der Klapprahmen in Querrichtung zwischen den beiden Aufnahmespuren angeordnet ist. Die weitere Aufnahmespur dient zum Aufnehmen eines Vorder- und/oder Hinterrads eines weiteren Fahrrads. Der Klapprahmen ist in Querrichtung zwischen beiden Aufnahmespuren und damit auch zwischen beiden zu transportierenden und/oder aufzubewahrenden Fahrrädern angeordnet. Insoweit ist der Klapprahmen beiden Fahrrädern zugeordnet. Hierdurch wird eine besonders einfache und kompakte Bauweise des Trägersystems ermöglicht. Hinsichtlich weiterer Merkmale der weiteren Aufnahmespur wird auf das bereits zu der Aufnahmespur Gesagte verwiesen und ausdrücklich Bezug genommen.

In weiterer Ausgestaltung der Erfindung ist das erste Rahmenglied in der Funktionsstellung wenigstens überwiegend in Hochrichtung längserstreckt und in der Nichtgebrauchsstellung wenigstens überwiegend in Längsrichtung längserstreckt. Mit anderen Worten ausgedrückt, ist das erste Rahmenglied in der Funktionsstellung nach oben von dem Grundgestell aufgeklappt und somit wenigstens überwiegend in Hochrichtung längserstreckt. In der Nichtgebrauchsstellung ist das erste Rahmenglied an das Grundgestell herangeklappt und somit wenigstens überwiegend in Längsrichtung längserstreckt. Vorzugsweise ist das erste Rahmenglied in der Funktionsstellung parallel zur Hochrichtung und/oder in der Nichtgebrauchsstellung parallel zur Längsrichtung längserstreckt.

In weiterer Ausgestaltung der Erfindung ist das zweite Rahmenglied in der Funktionsstellung wenigstens überwiegend in Längsrichtung längserstreckt und in der Nichtgebrauchsstellung wenigstens überwiegend in Längsrichtung längserstreckt. In der Funktionsstellung ist das zweite Rahmenglied in Hochrichtung weiter von dem Grundgestell beabstandet als in der Nichtgebrauchsstellung. In beiden Stellungen ist das zweite Rahmenglied wenigstens überwiegend in Längsrichtung längserstreckt, d.h. die Haupterstreckungsrichtung des zweiten Rahmenglieds ist in Längsrichtung orientiert. Dies schließt nicht aus, dass das Rahmenglied in der Funktionsstellung und/oder Nichtgebrauchsstellung wenigstens abschnittsweise geneigt zu der Längsrichtung längserstreckt ist.

In weiterer Ausgestaltung der Erfindung ist das erste Rahmenglied durchgängig gerade zwischen einem ersten Ende und einem zweiten Ende längserstreckt. Eine solche durchgängig gerade Längserstreckung erlaubt insbesondere eine vereinfachte und damit kostengünstige Herstellung.

In weiterer Ausgestaltung der Erfindung ist das zweite Rahmenglied wenigstens einfach abgewinkelt und weist einen ersten Rahmenabschnitt und einen zweiten Rahmenabschnitt auf, wobei in der Funktionsstellung der erste Rahmenabschnitt parallel zur Längsrichtung längserstreckt ist und der zweite Rahmenabschnitt ausgehend von dem ersten Rahmenabschnitt in Hochrichtung von oben nach unten sowie in Längsrichtung von hinten nach vorne geneigt längserstreckt ist. Eine solche Formgebung und Ausrichtung des zweiten Rahmenglieds erlaubt insbesondere eine verbesserte Stabilität des Klapprahmens in der Funktionsstellung. Zudem kann der Platzbedarf in der Nichtgebrauchsstellung weiter verringert werden. Vorzugsweise sind der erste Rahmenabschnitt und der zweite Rahmenabschnitt jeweils durchgängig gerade längserstreckt. Der erste Rahmenabschnitt ist einends gelenkig mit dem ersten Rahmenglied und andernends starr mit dem zweiten Rahmenabschnitt verbunden. Der zweite Rahmenabschnitt ist einends starr mit dem ersten Rahmenabschnitt verbunden. Andernends ist der zweite Rahmenabschnitt vorzugsweise lösbar starr mit dem Grundgestell verbunden. Dies jedenfalls in der Funktionsstellung.

In weiterer Ausgestaltung der Erfindung weist der Klapprahmen ein drittes Rahmenglied auf, das einends gelenkig an dem Grundgestell gelagert ist, andernends einen Griffabschnitt zum Greifen des Vorder- oder Hinterrads aufweist und zudem gelenkig mit dem zweiten Rahmenglied verbunden ist. Die gelenkige Verbindungsstelle des dritten Rahmenglieds mit dem zweiten Rahmenglied ist zwischen dem Griffabschnitt und dem Grundgestell und somit zwischen den beiden Enden des dritten Rahmenglieds angeordnet. Der Griffabschnitt wirkt in der Verwendung des Trägersystems mit dem Vorder- oder Hinterrad zusammen. Beispielsweise kann der Griffabschnitt haken- oder klauenförmig gestaltet und zum Greifen einer Vorder- oder Hinterradfelge des Fahrrads eingerichtet sein. Durch die gelenkige Verbindung mit dem Grundgestell einerseits und dem zweiten Rahmenglied andererseits wird das dritte Rahmenglied bei einer Verlagerung des zweiten Rahmenglieds zwangsgeführt und umgekehrt.

In der Funktionsstellung ragt das dritte Rahmenglied vorzugsweise überwiegend in Hochrichtung von dem Grundgestell auf. In der Nichtgebrauchsstellung ist das dritte Rahmenglied vorzugsweise kompakt an das Grundgestell herangeklappt.

In weiterer Ausgestaltung der Erfindung ragt das dritte Rahmenglied in der Funktionsstellung ausgehend von dem Grundgestell in Hochrichtung von unten nach oben sowie in Längsrichtung von hinten nach vorne von dem Grundgestell ab. Eine solche Orientierung des dritten Rahmenglieds in der Funktionsstellung bietet eine nochmals verbesserte Stabilität des Klapprahmens in der Funktionsstellung.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt in schematischer Perspektivdarstellung eine Ausführungsform eines erfindungsgemäßen Trägersystems für ein Fahrrad, wobei das Trägersystem ein Grundgestell und eine Halteeinrichtung in Form eines mehrgliedrigen Klapprahmens aufweist,
- Fig. 2: in schematischer Perspektivdarstellung das Trägersystem nach Fig. 1, wobei der Klapprahmen eine aufgeklappte Funktionsstellung einnimmt,
- Fig. 3: in schematischer Perspektivdarstellung das Trägersystem nach den Fig. 1 und 2, wobei der Klapprahmen eine ausgehend von der Funktionsstellung in Richtung des Grundgestells heranbewegte Zwischenstellung einnimmt,
- Fig. 4: in schematischer Perspektivdarstellung das Trägersystem nach den Fig. 1 bis 3, wobei der Klapprahmen eine zusammengeklappte Nichtgebrauchsstellung einnimmt, und
- Fig. 5, 6, 7: jeweils in teilweise abgeschnittener, schematischer Perspektivdarstellung das Trägersystem nach den Fig. 1 bis 4 in einem vorderen Bereich des Grundgestells, wobei der Klapprahmen die Funktionsstellung (Fig. 5), die Zwischenstellung (Fig. 6) und die Nichtgebrauchsstellung einnimmt (Fig. 7).

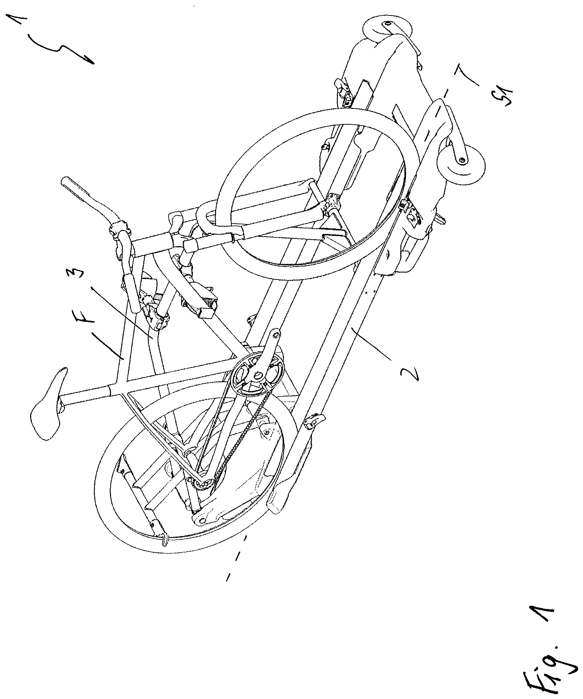

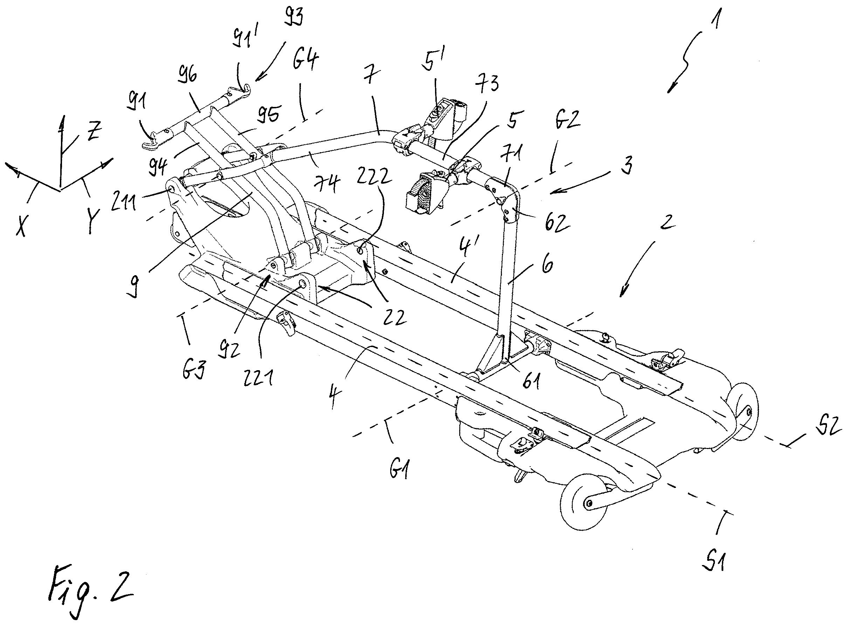

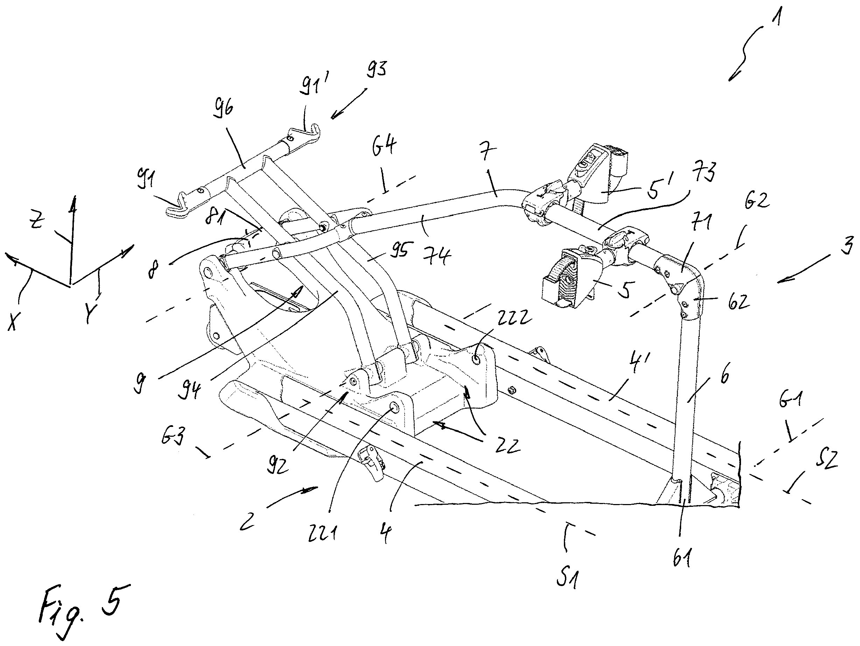

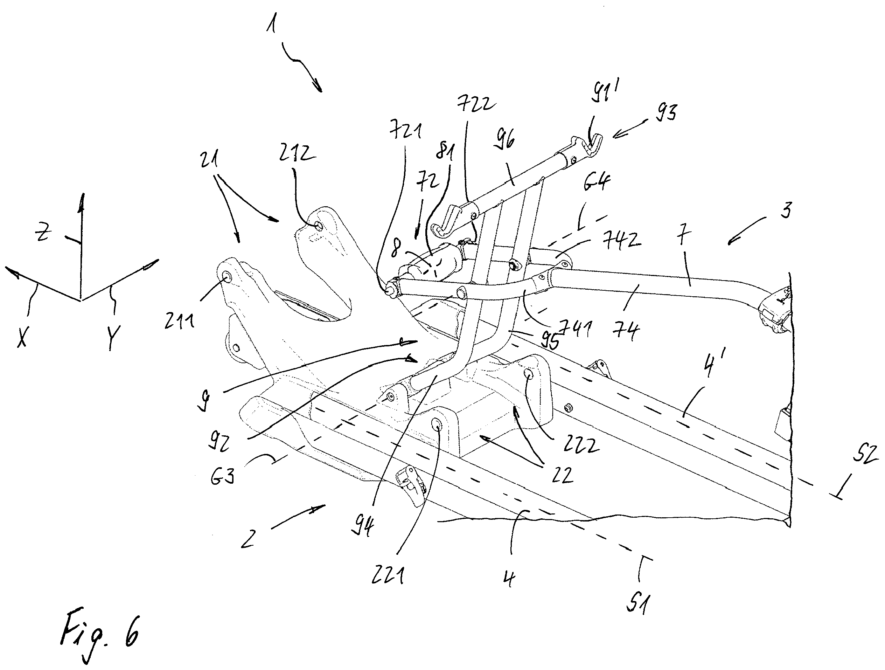

Gemäß Fig. 1 ist ein Trägersystem 1 zum Transport und/oder zum stationären Aufbewahren wenigstens eines Fahrrads F vorgesehen. Wie im Detail anhand der Fig. 2 bis 7 gezeigt ist, weist das Trägersystem 1 ein Grundgestell 2, wenigstens eine Aufnahmespur S1 und einen Klapprahmen 3 auf.

Bei der gezeigten Ausführungsform ist das Grundgestell 2 sowohl zur Montage an einem zeichnerisch nicht näher dargestellten Kraftfahrzeug als auch zum Aufstellen auf einer nicht näher bezeichneten ebenen Bodenfläche eingerichtet. Zur Montage an dem besagten Kraftfahrzeug weist das Grundgestell 2 eine nicht näher gezeigte Befestigungseinrichtung auf, die eine lösbare Befestigung des Grundgestells 2 an einem Heckbereich oder auf dem Dach des Kraftfahrzeugs ermöglicht. Solche Befestigungseinrichtungen sind dem Fachmann grundsätzlich bekannt. Im Übrigen ist die Art und Weise der Befestigung des Grundgestells 2 an dem Kraftfahrzeug im Hinblick auf die vorliegende Erfindung nicht von Bedeutung, so dass weitere diesbezügliche Erläuterungen entbehrlich sind. Zum Abstellen auf der Bodenfläche kann das Grundgestell 2 mehrere unterseitig angeordnete Stützfüße oder dergleichen aufweisen, die einen sicheren Stand des Grundgestells 2 gewährleisten. Auch dieser Aspekt ist im Hinblick auf die vorliegende Erfindung von untergeordneter Bedeutung, so dass auf weitere diesbezügliche Erläuterungen verzichtet wird.

Die Aufnahmespur S1 ist an dem Grundgestell 2 angeordnet und in Längsrichtung X längserstreckt. Die Aufnahmespur S1 dient zum Aufnehmen des Vorder- und des Hinterrads des Fahrrads F (Fig. 1). Bei der gezeigten Ausführungsform ist die Aufnahmespur S1 durch eine Radschiene 4 gebildet, die auf nicht näher gezeigte Weise an dem Grundgestell 2 befestigt ist. Bei einer zeichnerisch nicht dargestellten Ausführungsform ist die Aufnahmespur S1 eine Spur und/oder Linie im geometrischen Sinn, entlang welcher das Fahrrad F auf das Grundgestell 2 aufgestellt oder aufgeschoben ist. In der anhand Fig. 1 gezeigten Konfiguration sind die Aufnahmespur S1 und eine durch das Vorder- und Hinterrad gebildete Spur des Fahrrads F koaxial orientiert.

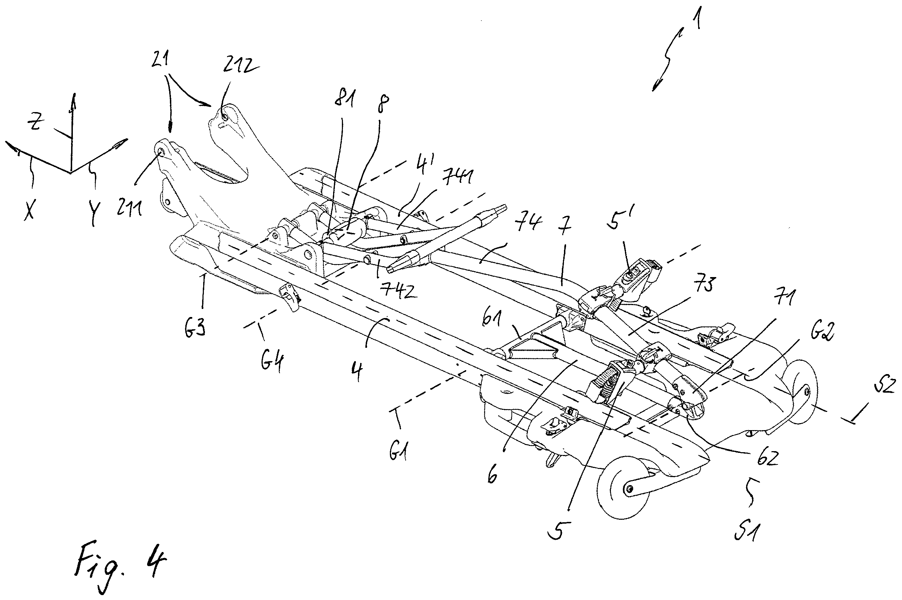

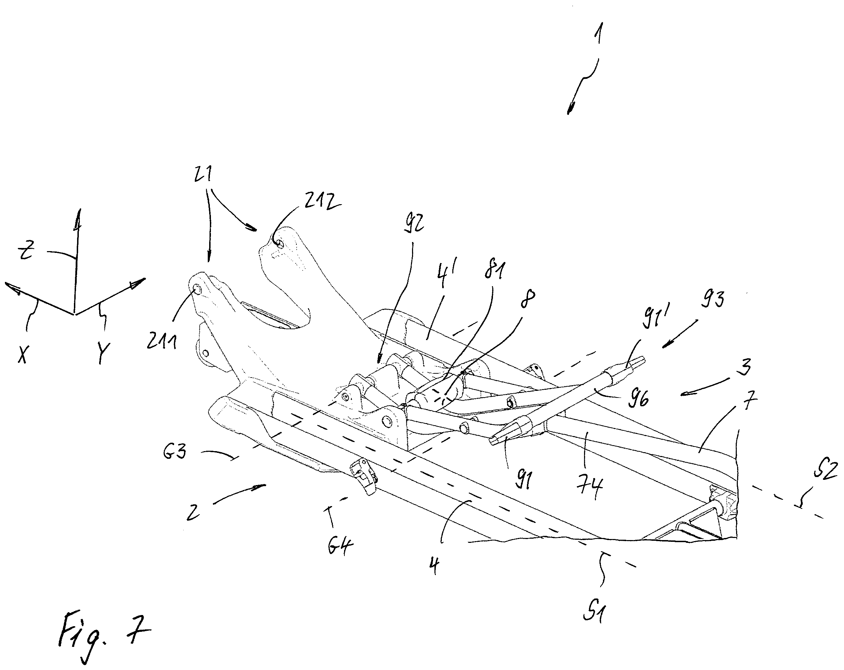

Der Klapprahmen 3 ist relativ zu dem Grundgestell 2 zwischen einer Funktionsstellung (Fig. 1, 2, 5) und einer Nichtgebrauchsstellung (Fig. 4, 7) verlagerbar. In der Funktionsstellung ragt der Klapprahmen 3 zum Halten des Fahrrads F in Hochrichtung Z von dem Grundgestell 2 auf. In der Nichtgebrauchsstellung ist der Klapprahmen 3 zum Verringern eines Raumbedarfs des Trägersystems 1 kompakt an das Grundgestell 2 heranbewegt.

In der anhand Fig. 1 gezeigten Konfiguration ist das Fahrrad F mittels einer Klemmvorrichtung 5 an dem Klapprahmen 3 befestigt. Die Klemmvorrichtung 5 weist eine dem Fachmann grundsätzlich bekannte Funktion und Gestaltung auf und greift einends an dem Fahrrad F, genauer: dessen Unterrohr, und andernends an dem Klapprahmen 3 an. Auf diese Weise können die bei der Halterung des Fahrrads F auftretenden Kräfte in Längsrichtung X und in Querrichtung Y auf den Klapprahmen 3 übertragen und von diesem auf das Grundgestell 2 abgetragen werden. Mit anderen Worten ausgedrückt, dient der Klapprahmen 3 in erster Linie einer Aufnahme von Längs- und Querkräften. Dementgegen nimmt das Grundgestell 2 in erster Linie die entlang der Hochrichtung Z wirkende Gewichtskraft des Fahrrads F auf.

Der Klapprahmen 3 ist in Querrichtung Y seitlich versetzt zu der Aufnahmespur S1 längserstreckt. Zudem ist der Klapprahmen 3 mehrgliedrig gestaltet und weist wenigstens ein erstes Rahmenglied 6 und ein zweites Rahmenglied 7 auf. Die beiden Rahmenglieder 6, 7 sind in Längsrichtung X und in Hochrichtung Z relativ zueinander und relativ zu dem Grundgestell 2 zwischen der Funktions- und der Nichtgebrauchsstellung auf- und zusammenklappbar. Der noch näher beschriebene Gelenk- und/oder Bewegungsmechanismus des Klapprahmens 3 weist dementsprechend eine in Längsrichtung X und in Hochrichtung Z erstreckte Klappebene auf. Mit anderen Worten ausgedrückt, ist die Klappebene des Klapprahmens 3 eine vertikal orientierte Längsebene und/oder X-Z-Ebene. Bei der gezeigten Ausführungsform fällt die Klappebene des Klapprahmens 3 mit der vertikalen Mittellängsebene des Trägersystems 1 zusammen.

Um die besagte Klappbeweglichkeit des Klapprahmens 3 zu gewährleisten, ist das erste Rahmenglied einends gelenkig an dem Grundgestell 2 gelagert und das zweite Rahmenglied 7 ist gelenkig mit dem ersten Rahmenglied 6 verbunden.

Das erste Rahmenglied 6 ist einends um eine erste Gelenkachse G1 schwenkbeweglich an dem Grundgestell 2 gelagert. Andernends des ersten Rahmenglieds 6 weist der Klapprahmen 3 eine zweite Gelenkachse G2 auf, um welche das erste Rahmenglied 6 und das zweite Rahmenglied 7 relativ zueinander schwenkbeweglich sind. Die erste Gelenkachse G1 und die zweite Gelenkachse G2 sind jeweils parallel zur Querrichtung Y orientiert.

Das zweite Rahmenglied 7 ist bei der gezeigten Ausführungsform wenigstens in der Funktionsstellung (Fig. 1, 2, 5) an seinem dem ersten Rahmenglied 6 abgewandten Ende lösbar starr mit dem Grundgestell 2 verbunden. Zum Überführen des Klapprahmens 3 in die Nichtgebrauchsstellung kann die besagte Verbindung zwischen dem zweiten Rahmenglied 7 und dem Grundgestell 2 auf noch näher beschriebene Weise gelöst werden.

Nachfolgend werden weitere strukturelle und funktionelle Merkmale des Trägersystems 1 im Detail erläutert. Diese Merkmale sind als vorteilhaft, aber im Hinblick auf die vorliegende Erfindung als nicht zwingend erforderlich zu erachten.

Bei der gezeigten Ausführungsform weist das Grundgestell 2 eine weitere Aufnahmespur S2 auf. Die weitere Aufnahmespur S2 ist parallel zu der Aufnahmespur S1 längserstreckt. Die Aufnahmespuren S1, S2 können auch als erste Aufnahmespur S1 und zweite Aufnahmespur S2 bezeichnet werden. Die zweite Aufnahmespur S2 dient einer Aufnahme eines weiteren, nicht näher gezeigten Fahrrads.

Der Klapprahmen 3 ist in Querrichtung Y zwischen der ersten Aufnahmespur S1 und der zweiten Aufnahmespur S2 angeordnet und beiden Aufnahmespuren S1, S2 zugeordnet. Hierdurch kann auf eine gesonderte Halteeinrichtung oder einen gesonderten Klapprahmen zum Halten eines auf der zweiten Aufnahmespur S2 aufgenommenen Fahrrads verzichtet werden. Zum Halten eines weiteren, der zweiten Aufnahmespur S2 zugeordneten Fahrrads ist vorliegend eine weitere Klemmvorrichtung 5' vorgesehen und einends an dem Klapprahmen 3 befestigt.

Die zweite Aufnahmespur S2 ist durch eine zweite Radschiene 4' gebildet. Hinsichtlich der zweiten Radschiene 4' gilt das zu der ersten Radschiene 4 Gesagte sinngemäß entsprechend. In der kompakt abgelegten Nichtgebrauchsstellung ist der Klapprahmen 3 wenigstens abschnittsweise in Hochrichtung Z zwischen die beiden Radschienen 4, 4' und damit auch die durch diese gebildeten Aufnahmespuren S1, S2 abgesenkt.

Bei zeichnerisch nicht näher dargestellten Ausführungsformen weist das Trägersystem lediglich eine Aufnahmespur oder mehr als die vorliegend gezeigten zwei Aufnahmespuren auf. Sofern beispielsweise drei parallel längserstreckte Aufnahmespuren vorgesehen sind, ist es vorteilhaft, wenn dementsprechend zwei Klapprahmen vorhanden sind.

Das erste Rahmenglied 6 ist bei der gezeigten Ausführungsform zwischen einem ersten Ende 61 und einem zweiten Ende 62 längserstreckt. Die erste Gelenkachse G1 ist an dem ersten Ende 61 angeordnet. Die zweite Gelenkachse G2 ist an dem zweiten Ende 62 angeordnet. Das erste Rahmenglied 6 ist bei der gezeigten Ausführungsform durchgängig gerade zwischen seinem ersten Ende 61 und seinem zweiten Ende 62 längserstreckt. In der Funktionsstellung ist das erste Rahmenglied 6 parallel zur Hochrichtung Z orientiert. In der Nichtgebrauchsstellung ist das erste Rahmenglied 6 parallel zur Längsrichtung X ausgerichtet.

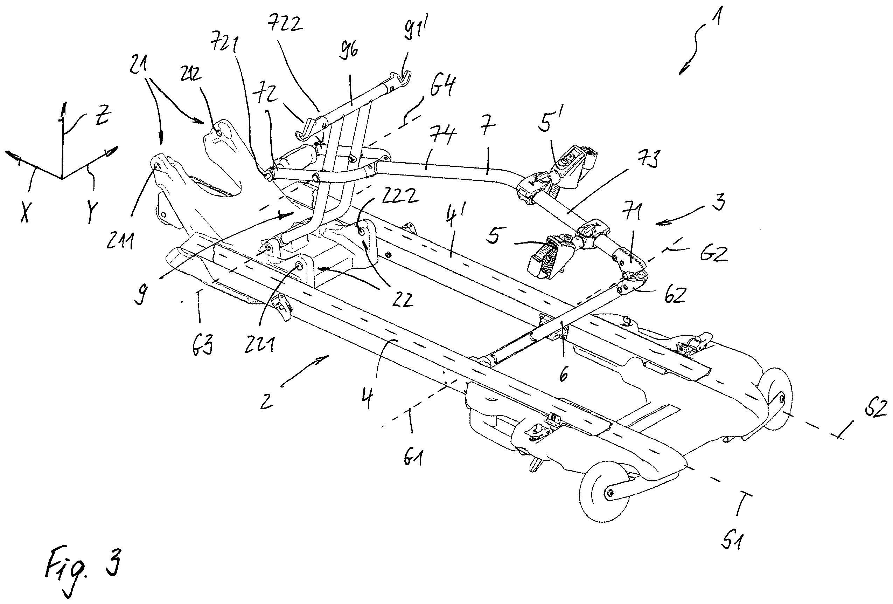

Das zweite Rahmenglied 7 ist sowohl in der Funktionsstellung als auch in der Nichtgebrauchsstellung im Wesentlichen parallel zur Längsrichtung X orientiert. Das zweite Rahmenglied 7 ist zwischen einem ersten Ende 71 und einem zweiten Ende 72 (Fig. 3) längserstreckt. Die zweite Gelenkachse G2 ist im Bereich des ersten Endes 71 des zweiten Rahmenglieds 7 angeordnet. Mit anderen Worten ausgedrückt, sind das erste Ende 71 und das zweite Ende 62 um die zweite Gelenkachse G2 relativbeweglich miteinander verbunden.

Das zweite Ende 72 des zweiten Rahmenglieds 7 ist in der Funktionsstellung lösbar starr mit einem ersten Verbindungsabschnitt 21 des Grundgestells 2 verbunden. In der Nichtgebrauchsstellung ist das zweite Ende 72 des zweiten Rahmenglieds 7 lösbar starr mit einem zweiten Verbindungsabschnitt 22 des Grundgestells 2 verbunden. Der erste Verbindungsabschnitt 21 ist an einem in Bezug auf die Längsrichtung X vorderen Stirnendbereich des Grundgestells 2 angeordnet. Der zweite Verbindungsabschnitt 22 ist ausgehend von dem vorderen Stirnende des Grundgestells 2 in Richtung eines nicht näher bezeichneten hinteren Stirnendes zurückversetzt. Der zweite Verbindungsabschnitt 22 in Bezug auf die Längsrichtung X näher an der ersten Gelenkachse G1 positioniert als der erste Verbindungsabschnitt 21.

Zur lösbaren Verbindung mit den beiden Verbindungsabschnitten 21, 22 weist der Klapprahmen 3 wenigstens ein Verbindungselement auf, das lösbar mit dem jeweiligen Verbindungsabschnitt verbindbar ist.

Bei der gezeigten Ausführungsform weist der Klapprahmen 3 zwei in Querrichtung voneinander beabstandet angeordnete Verbindungsbolzen 721, 722 auf. Die Verbindungsbolzen 721, 722 sind an dem zweiten Ende 72 des zweiten Rahmenglieds 7 angeordnet und können auch als erster Verbindungsbolzen 721 und zweiter Verbindungsbolzen 722 bezeichnet werden. Die Verbindungsbolzen 721, 722 sind in Bezug auf die vertikale Mittellängsebene in Querrichtung Y zueinander entgegengesetzt nach außen federbelastet vorgespannt.

Die Verbindungsabschnitte 21, 22 weisen in Querrichtung Y gegenüberliegend angeordnete Bolzenaufnahmen 211, 212, 221, 222 auf. Die Bolzenaufnahmen 211, 212, 221, 222 sind zur Aufnahme der Verbindungsbolzen 721, 722 eingerichtet. Dabei können die Bolzenaufnahmen 211, 221 jeweils auch als erste Bolzenaufnahme bezeichnet werden. Die Bolzenaufnahmen 212, 222 können jeweils auch als zweite Bolzenaufnahme bezeichnet werden.

In der Funktionsstellung sind die Verbindungsbolzen 721, 722 lösbar mit den Bolzenaufnahmen 211, 212 des ersten Verbindungsabschnitts 21 verrastet. Im Speziellen greift der erste Verbindungsbolzen 721 in die erste Bolzenaufnahme 211 ein und der zweite Verbindungsbolzen 722 greift in die zweite Bolzenaufnahme 212 ein. In der Nichtgebrauchsstellung sind die Verbindungsbolzen 721, 722 lösbar mit den Bolzenaufnahmen 221, 222 des zweiten Verbindungsabschnitts 22 verrastet. Im Speziellen greift der erste Verbindungsbolzen 721 hierbei in die erste Bolzenaufnahme 221 ein und der zweite Verbindungsbolzen 722 greift in die zweite Bolzenaufnahme 222 ein.

Es versteht sich, dass das zweite Ende 72 des zweiten Rahmenglieds 7 ungeachtet der vorliegenden Ausführungsform auf unterschiedliche Arten lösbar mit dem Grundgestell verbunden werden kann. Insoweit ist die vorliegend gezeigte Bolzenverbindung zwischen den Verbindungsbolzen und den Bolzenaufnahmen als rein exemplarisch zu verstehen.

Im Übrigen muss das zweite Ende 72 in der Nichtgebrauchsstellung nicht unbedingt mit dem Grundgestell 2 verbunden sein.

Zum Arretieren der besagten Bolzenverbindung ist vorliegend eine Arretiereinrichtung 8 mit einem Drehgriff 81 vorgesehen. Die Arretiereinrichtung 8 ist im Bereich des zweiten Endes 72 des zweiten Rahmenglieds 7 angeordnet und wirkt auf nicht näher gezeigte Weise auf die beiden Verbindungsbolzen 721, 722. Mittels einer manuellen Drehbetätigung des Drehgriffs 81 können die Verbindungsbolzen 721, 722 in Querrichtung Y nach innen und/oder außen verlagert werden. Hierdurch kann die Verbindung des zweiten Endes 72 mit dem jeweiligen Verbindungsabschnitt 21, 22 arretiert und/oder gelöst werden. Eine solche Arretierung ist jedoch nicht zwingend erforderlich und dementsprechend nicht bei sämtlichen Ausführungsformen vorhanden.

Das zweite Rahmenglied 7 weist bei der gezeigten Ausführungsform einen ersten Rahmenabschnitt 73 und einen zweiten Rahmenabschnitt 74 auf, wobei die beiden Rahmenabschnitte 73, 74 zueinander geneigt orientiert sind. Mit anderen Worten ausgedrückt, ist das zweite Rahmenglied 7 vorliegend abgewinkelt, gekrümmt und/oder abgekröpft. Der erste Rahmenabschnitt 73 weist einends das erste Rahmenende 71 auf und ist andernends mit dem zweiten Rahmenabschnitt 74 verbunden. Der zweite Rahmenabschnitt 74 ist einends, wie bereits erläutert, mit dem ersten Rahmenabschnitt 73 verbunden und weist andernends das zweite Ende 72 auf. In der Funktionsstellung ist der erste Rahmenabschnitt 73 parallel zur Längsrichtung X längserstreckt und insoweit orthogonal zu dem ersten Rahmenglied 6 orientiert. Vorliegend greifen die beiden Klemmvorrichtungen 5, 5' an dem ersten Rahmenabschnitt 73 an. Der zweite Rahmenabschnitt 74 ist in der Funktionsstellung ausgehend von dem ersten Rahmenabschnitt 73 in Längsrichtung X nach vorne und in Hochrichtung Z nach unten geneigt. In der Nichtgebrauchsstellung sind die beiden Rahmenabschnitte 73, 74 im Wesentlichen entlang der Längsrichtung X ausgerichtet (Fig. 4).

Bei der gezeigten Ausführungsform weist der Klapprahmen 3 zudem ein drittes Rahmenglied 9 auf. Das dritte Rahmenglied 9 ist einends gelenkig an dem Grundgestell 2 gelagert, weist andernends einen Griffabschnitt 91 auf und ist zudem gelenkig mit dem zweiten Rahmenglied 7 verbunden. Das dritte Rahmenglied 9 ist einends um eine dritte Gelenkachse G3 schwenkbeweglich an dem Grundgestell 2 gelagert. Die dritte Gelenkachse G3 ist parallel zur Querrichtung Y und damit auch zu der ersten Gelenkachse G1 und der zweiten Gelenkachse G2 orientiert. Das dritte Rahmenglied 9 und das zweite Rahmenglied 7 sind um eine vierte Gelenkachse G4 schwenkbeweglich miteinander verbunden. Die vierte Gelenkachse G4 ist parallel zu der dritten Gelenkachse G3 orientiert. Hinsichtlich der Orientierung der vierten Gelenkachse G4 in Bezug auf die Querrichtung Y und die weiteren Gelenkachsen G1, G2 gilt sinngemäß das bereits zu der dritten Gelenkachse G3 Gesagte.

Bei der gezeigten Ausführungsform ist das dritte Rahmenglied 9 zwischen einem ersten Ende 92 und einem zweiten Ende 93 erstreckt. Die dritte Gelenkachse G3 ist im Bereich des ersten Endes 92 angeordnet. Der Griffabschnitt 91 ist im Bereich des zweiten Endes 93 angeordnet. Die vierte Gelenkachse G3 ist in Bezug auf die Längserstreckung des dritten Rahmenglieds 9 zwischen dem ersten Ende 92 und dem zweiten Ende 93 angeordnet.

Vorliegend ist das dritte Rahmenglied 9 aus mehreren Rahmenabschnitten 94, 95, 96 zusammengefügt. Die beiden Rahmenabschnitte 94, 95 können auch als Längsabschnitte bezeichnet werden. Der Rahmenabschnitt 96 kann auch als Querabschnitt bezeichnet werden und verbindet die beiden Längsabschnitte 94, 95 in Querrichtung miteinander. Letztere sind in Bezug auf die Querrichtung Y zueinander beabstandet angeordnet.

Im Übrigen ist das zweite Rahmenglied 7 im Bereich der vierten Gelenkachse G4 gabelförmig gestaltet. Die besagte Gabelform wird durch zwei Gabelabschnitte 741, 742 des zweiten Rahmenabschnitts 74 gebildet. Die Gabelabschnitte 741, 742 sind in Querrichtung Y voneinander beabstandet angeordnet. Das dritte Rahmenglied 9, genauer: dessen Längsabschnitte 94, 95, greifen in Querrichtung zwischen die beiden Gabelabschnitte 741, 742.

Der Griffabschnitt 91 ist zum Greifen des Vorder- und/oder Hinterrads des Fahrrads F eingerichtet. In der anhand Fig. 1 gezeigten Konfiguration greift der Griffabschnitt 91 an dem Hinterrad des Fahrrads F an. Mittels des Griffabschnitts 91 kann das Fahrrad F zur weiteren Befestigung mittels der Klemmvorrichtung 5 stabilisiert werden, so dass auf ein zwischenzeitliches manuelles Halten des Fahrrads F verzichtet werden kann.

Bei der gezeigten Ausführungsform weist das dritte Rahmenglied 9 im Übrigen einen weiteren Griffabschnitt 91' auf. Dieser ist der zweiten Aufnahmespur S2 zugeordnet und andernends des Querabschnitts 96 angeordnet.

In der Funktionsstellung ragt das dritte Rahmenglied 9 ausgehend von der dritten Gelenkachse G3 in Hochrichtung Z nach oben und in Längsrichtung X nach vorne von dem Grundgestell 2 auf. In der Nichtgebrauchsstellung ist das dritte Rahmenglied 9 im Wesentlichen in Längsrichtung X orientiert und kompakt an das Grundgestell 2 herangeschwenkt.

Ausgehend von der Funktionsstellung kann der Klapprahmen 3 wie folgt in die Nichtgebrauchsstellung überführt werden:
Zunächst wird der Drehgriff 81 der Arretiereinrichtung 8 manuell gegriffen und drehbetätigt. Hierdurch wird eine axiale Beweglichkeit der Verbindungsbolzen 721, 722 freigegeben und/oder bewirkt. Die Verbindungsbolzen 721, 722 greifen hierdurch aus den Bolzenaufnahmen 211, 212 des ersten Verbindungsabschnitts 21 aus. Hiernach ist das zweite Ende 72 des zweiten Rahmenglieds 7 von dem Grundgestell gelöst. In gelöstem Zustand kann der Klapprahmen 3 unter Handhabung des Drehgriffs 8 zusammengeklappt werden. Selbstverständlich kann ein Bediener den Klapprahmen 3 hierfür auch an anderer Stelle angreifen. Bei dem Zusammenklappen wird das erste Rahmenglied 6 - in Bezug auf die Blickebene der Fig. 1 bis 7 - im Uhrzeigersinn um die erste Gelenkachse G1 an das Grundgestell 2 herangeschwenkt. Gleichzeitig klappt das zweite Rahmenglied 7 um die zweite Gelenkachse G2 entgegen dem Uhrzeigersinn an das erste Rahmenglied 6 heran. Infolge der Verbindung mit dem zweiten Rahmenglied 7 wird das dritte Rahmenglied 9 gleichsam zwangsgeführt mitbewegt und verschwenkt hierbei im Uhrzeigersinn um die dritte Gelenkachse G3 relativ zu dem Grundgestell 2. Zudem bewegen sich das zweite Rahmenglied 7 und das dritte Rahmenglied 9 relativ zueinander um die vierte Gelenkachse G4. Sobald die zusammengeklappte Nichtgebrauchsstellung erreicht ist, kann der Klapprahmen 3 im Bereich des zweiten Endes 72 an dem Grundgestell 2 arretiert werden. Diese Arretierung erfolgt vorliegend mittels der Arretiereinrichtung 8 und der besagten Bolzenverbindung zwischen den Verbindungsbolzen 721, 722 und den Bolzenaufnahmen 221, 222 des zweiten Verbindungsabschnitts 22.

Die erste Gelenkachse G1 und die dritte Gelenkachse G3 sind in Bezug auf das Grundgestell 2 ortsfest. Die zweite Gelenkachse G2 und die vierte Gelenkachse G4 sind in Bezug auf das Grundgestell 2 beweglich. Hierbei bewegt sich die zweite Gelenkachse G2 beim Auf- und Zusammenklappen des Klapprahmens 3 auf einem Kreisbogen um die erste Gelenkachse G1.

Entsprechendes gilt sinngemäß im Hinblick auf die Bewegung der vierten Gelenkachse G4. Diese bewegt sich kreisbogenförmig um die dritte Gelenkachse G3.

Eine Verlagerung des Klapprahmens 3 ausgehend von der Nichtgebrauchsstellung in die Funktionsstellung erfolgt sinngemäß kinematisch umgekehrt.

## Patentansprüche

1. Trägersystem (1) zum Transport und/oder zum stationären Aufbewahren wenigstens eines Fahrrads (F), aufweisend
ein Grundgestell (2), das zur Montage an einem Kraftfahrzeug und/oder zum Abstellen auf einer Bodenfläche eingerichtet ist,
wenigstens eine an dem Grundgestell (2) angeordnete und in Längsrichtung (X) längserstreckte Aufnahmespur (S1), die zum Aufnehmen eines Vorder- und/oder Hinterrads des Fahrrads (F) eingerichtet ist,
und aufweisend wenigstens eine Halteeinrichtung, die relativ zu dem Grundgestell (2) beweglich ist zwischen einer Funktionsstellung, in welcher die Halteeinrichtung zum Halten des wenigstens einen Fahrrads (F) in Hochrichtung (Z) von dem Grundgestell (2) aufragt, und einer Nichtgebrauchsstellung, in welcher die Halteeinrichtung zum Verringern eines Raumbedarfs an das Grundgestell (2) heranbewegt ist,
**dadurch gekennzeichnet, dass** die Halteeinrichtung einen seitlich versetzt zu der Aufnahmespur (S1) längserstreckten, mehrgliedrigen Klapprahmen (3) mit wenigstens einem gelenkig an dem Grundgestell (2) gelagerten ersten Rahmenglied (6) und einem gelenkig mit dem ersten Rahmenglied (6) verbundenen zweiten Rahmenglied (7) aufweist, wobei die Rahmenglieder (6, 7) in einer im Wesentlichen in Längsrichtung (X) und in Hochrichtung (Z) erstreckten Klappebene relativ zueinander und relativ zu dem Grundgestell (2) zwischen der Funktions- und der Nichtgebrauchsstellung auf- und zusammenklappbar sind.

2. Trägersystem (1) nach Anspruch 1, **dadurch gekennzeichnet, dass** das zweite Rahmenglied (7) wenigstens in der Funktionsstellung einends mit dem Grundgestell (2) lösbar starr verbunden ist.

3. Trägersystem (1) nach Anspruch 1 oder 2, **dadurch gekennzeichnet, dass** das zweite Rahmenglied (7) in der Funktionsstellung einends mit einem ersten Verbindungsabschnitt (21) des Grundgestells (2) und in der Nichtgebrauchsstellung mit einem zweiten Verbindungsabschnitt (22) des Grundgestells (2) lösbar starr verbunden ist.

4. Trägersystem (1) nach einem der vorhergehenden Ansprüche, **dadurch gekennzeichnet, dass** eine Arretiereinrichtung (8) vorhanden ist, mittels derer das zweite Rahmenglied (7) wenigstens in der Funktionsstellung einends an dem Grundgestell (2) lösbar arretiert ist.

5. Trägersystem (1) nach einem der vorhergehenden Ansprüche, **dadurch gekennzeichnet, dass** eine parallel zu der Aufnahmespur (S1) längserstreckte weitere Aufnahmespur (S2) vorhanden ist, wobei der Klapprahmen (3) in Querrichtung (Y) zwischen den beiden Aufnahmespuren (S1, S2) angeordnet ist.

6. Trägersystem (1) nach einem der vorhergehenden Ansprüche, **dadurch gekennzeichnet, dass** das erste Rahmenglied (6) in der Funktionsstellung wenigstens überwiegend in Hochrichtung (Z) längserstreckt ist und in der Nichtgebrauchsstellung wenigstens überwiegend in Längsrichtung (X) längserstreckt ist.

7. Trägersystem (1) nach einem der vorhergehenden Ansprüche, **dadurch gekennzeichnet, dass** das zweite Rahmenglied (7) in der Funktionsstellung wenigstens überwiegend in Längsrichtung (X) längserstreckt ist und in der Nichtgebrauchsstellung wenigstens überwiegend in Längsrichtung (X) längserstreckt ist.

8. Trägersystem (1) nach einem der vorhergehenden Ansprüche, **dadurch gekennzeichnet, dass** das erste Rahmenglied (6) durchgängig gerade zwischen einem ersten Ende (61) und einem zweiten Ende (62) längserstreckt ist.

9. Trägersystem (1) nach einem der vorhergehenden Ansprüche, **dadurch gekennzeichnet, dass** das zweite Rahmenglied (7) wenigstens einfach abgewinkelt ist und einen ersten Rahmenabschnitt (73) und einen zweiten Rahmenabschnitt (74) aufweist, wobei in der Funktionsstellung der erste Rahmenabschnitt (73) parallel zur Längsrichtung (X) längserstreckt ist und der zweite Rahmenabschnitt (74) ausgehend von dem ersten Rahmenabschnitt (73) in Hochrichtung (Z) von oben nach unten sowie in Längsrichtung (X) von hinten nach vorne geneigt längserstreckt ist.

10. Trägersystem (1) nach einem der vorhergehenden Ansprüche, **dadurch gekennzeichnet, dass** der Klapprahmen (3) ein drittes Rahmenglied (9) aufweist, das einends gelenkig an dem Grundgestell (2) gelagert ist, andernends einen Griffabschnitt (91) zum Greifen des Vorder- oder Hinterrads aufweist und gelenkig mit dem zweiten Rahmenglied (7) verbunden ist.

11. Trägersystem (1) nach Anspruch 10, **dadurch gekennzeichnet, dass** das dritte Rahmenglied (9) in der Funktionsstellung ausgehend von dem Grundgestell (2) in Hochrichtung (Z) von unten nach oben sowie in Längsrichtung (X) von hinten nach vorne von dem Grundgestell (2) abragt.
